# EUROPÄISCHE PATENTSCHRIFT

(11) **EP 0 546 999 B1**
(45) Veröffentlichungstag und Bekanntmachung des Hinweises auf die Patenterteilung: **22.05.1996**
(21) Anmeldenummer: 92810955.2
(22) Anmeldetag: 04.12.1992
(51) Int. Cl.: B65D 5/74, B29C 45/16, B29C 45/00

(54) **Verschlusseinheit eines Gebindes für fliessfähiges Gut**
Closure assembly for a container for free-flowing products
Ensemble de fermeture d'un emballage pour produit fluide

(30) Priorität: 12.12.1991 CH 3681/91; 12.12.1991 CH 3682/91; 12.12.1991 CH 3685/91; 12.12.1991 CH 3683/91
(43) Veröffentlichungstag der Anmeldung: 16.06.1993
(73) Patentinhaber: Tetra Laval Holdings & Finance SA, CH-1009 Pully (CH)
(72) Erfinder: Mock, Elmar, CH-2504 Biel/Bienne (CH)
(74) Vertreter: Frei, Alexandra Sarah

(56) Entgegenhaltungen:
- EP-A- 0 316 269
- FR-A- 2 647 088
- US-A- 3 443 005
- US-A- 3 917 789
- US-A- 4 887 747

## Beschreibung

Die Erfindung liegt auf dem Gebiete der Verpackungsindustrie und betrifft eine Verschlusseinheit und ein Herstellungsverfahren derselben gemäss den Oberbegriffen der entsprechenden unabhängigen Patentansprüche.

An Gebinden für Müssigkeiten wie beispielweise Metalldosen oder Behälter aus beschichtetem Karton werden für eine wiederverschliessbare Öffnung und für ein bequemes Ausgiessen oft Verschlusseinheiten, vorzugsweise aus Kunststoff, bestehend aus einem Ausgussteil mit einer Ausgussöffnung und einem die Ausgussöffnung des Ausgussteils verschliessenden Verschlussteil eingesetzt, die in einer Öffnung des Gebindes angebracht werden. Die beiden schweizerischen Patentanmeldungen Nr. 2740/91 und 2739/91 (Anmeldedatum 17.9.91) derselben Anmelderin beschreiben derartige Verschlusseinheiten. Die beschriebenen Verschlusseinheiten werden nach einem Mehrmaterialien-Spritzgussverfahren gegossen und bestehen aus mindestens zwei sich in mindestens einer Eigenschaft unterscheidenden Materialien.

In der Anmeldeschrift 2740/91 wird für eine bequeme Handhabung gefordert, dass die Verschlusseinheit bei normalem Gebrauch immer als Ganzes mit dem Gebinde verbunden sei, derart dass der Verschlussteil auch in geöffnetem Zustand nicht vollständig vom Ausgussteil entfernt werden kann. Zur Erfüllung dieser Forderung wird ein flexibler Steg (oder mehrere Stege) vorgeschlagen, der den Verschlussteil flexibel mit dem Ausgussteil verbindet oder der an den Verschlussteil angeformt ist und zwischen Gebinde und Ausgussteil festgehalten wird. Der Nachteil dieser Verbindung zwischen Ausgussteil (bzw. Gebinde) und Verschlussteil besteht darin, dass der Verschlussteil im geöffneten Zustand keine definierte Position hat, sodass zum Verschliessen vor einer effektiv schliessenden Bewegung eine positionierende Bewegung notwendig ist. Zudem wird der Steg je nach Bewegung beim Öffnen oder Schliessen an verschiedenen Orten deformiert. Damit das Material durch diese Deformationen nicht schnell ermüdet und bricht, muss es entweder sehr flexibel sein oder der Steg muss sehr dünn sein. Da der Steg vorzugsweise aus demselben Material besteht, aus dem auch der Verschlussteil, insbesondere dessen Aussenbereiche bestehen, ist eine Einschränkung der Materialauswahl durch die Anforderungen des Steges unerwünscht und ein sehr dünner Steg wird in Bezug auf Beanspruchung auf Zug nicht stabil genug sein.

Auch bekannte Verschlusseinheiten, die aus *einem* Material gegossen sind, weisen Verbindungsstege zwischen Ausgussteil und Verschlussteil auf. Die Verschlusseinheit wird in geöffnetem Zustand hergestellt und vor oder nach der Montage am Gebinde geschlossen. Die Stegverbindung weist dieselben Nachteile auf wie die Verbindungsstege gemäss schweizerischer Anmeldeschrift Nr. 2740/91. Weitere Verschlusseinheiten die aus einem oder mehreren Materialien bestehen, werden in den Schriften US-4887747 und US-3443005 offenbart. EP-A-316269 offenbart eine Verschlusseinheit gemäss dem Oberbegriff des Anspruchs 1.

Es ist nun die Aufgabe der Erfindung, eine Verschlusseinheit zu schaffen, deren Verschlussteil auch in geöffnetem Zustand mit dem Ausgussteil verbunden bleibt und zwar in einer gegenüber dem Ausgussteil derart definierten Stellung, dass eine einzige, einfache Schliessbewegung ausreicht, um die Ausgussöffnung zu verschliessen. Die permanente Verbindung zwischen den beiden Teilen der Verschlusseinheit soll derart gestaltet sein, dass sie die Materialwahl für die Verschlusseinheit möglichst wenig einengt. Die Verschlusseinheit soll trotzdem in einem Arbeitsschritt hergestellt und in einem Arbeitsschritt am Gebinde montierbar sein.

Diese Aufgabe wird gelöst durch die Verschlusseinheit und durch das Herstellungsverfahren, wie sie in den Patenansprüchen definiert sind.

Die erfindungsgemässe Verschlusseinheit hat ein Scharnier. Dieses Scharnier weist mindestens einen am Ausgussteil angeformten, quasi stationären Lagerteil und mindestens einen am Verschlussteil angeformten Scharnierteil auf, der im Lagerteil mindestens begrenzt schwenkbar gelagert ist. Der Lagerteil und der Scharnierteil können ein Paar in sich geschlossener Lagerflächen bilden, sodass das Scharnier gleichzeitig als Befestigungsmittel für den Verschlussteil als auch als Lagermittel dient. Die Lagerflächenpaare können aber auch statt in sich geschlossen offen sein, derart, dass das Scharnier nicht als Befestigungsmittel dienen kann. Der Verschlussteil muss dann mit anderen Mitteln, beispielsweise mit einer leicht deformierbaren, vom Verschlussteil in den Ausgussteil reichende Materialzone (Filmzone), am Ausgussteil befestigt sein. Lagerteil und Scharnierteil können derart ausgebildet sein, dass eine oder mehrere bestimmte Schwenkpositionen des Verschlussteiles gegenüber dem Lagerteil ausgezeichnet sind, das heisst, dass der Verschlussteil sich beim Öffnen der Verschlusseinheit in eine dieser Schwenkpositionen bewegt, wenn dies nicht mit speziellen Vorkehrungen verhindert wird.

Die erfindungsgemässe Verschlusseinheit wird nach einem Mehrmaterialien-Spritzgussverfahren hergestellt, wobei der Lagerteil des Scharniers aus einem Material und der Scharnierteil aus einem anderen Material gegossen wird. Da die beim Mehrmaterialien-Spritzgussverfahren aneinandergegossenen Oberflächen sehr präzise und dichtend aufeinander passen und da die Verschlusseinheit mit dem Scharnier in geschlossenem Zustand hergestellt wird, ist das Scharnier wenigstens in geschlossenem Zustand der Verschlusseinheit derart dicht, dass der Bereich des Scharniers zwischen Verschlussteil und Ausgussteil nicht unbedingt durch weitere Dichtungsmittel abgedichtet werden muss. Dies erlaubt eine sehr kompakte Form der Verschlusseinheit.

Einige beispielhafte Ausführungsformen der erfindungsgemässen Verschlusseinheit werden anhand der folgenden Figuren detailliert beschrieben. Dabei zeigen:
- **Figur 1**: eine schematische Darstellung einer beispielhaften Ausführungsform der erfindungsgemässen Verschlusseinheit mit Scharnier;
- **Figuren 2a bis 2c**: weitere Ausführungsformen der erfindungsgemässen Verschlusseinheit als schematische Draufsicht auf den Verschlussteil;
- **Figur 3**: ein Schnitt senkrecht zur Schwenkachse durch ein beispielhaftes Scharnier mit einem Paar in sich geschlossener Lagerflächen;
- **Figuren 4a bis 4c**: Schnitte entlang der Schwenkachse für verschiedene, beispielhafte Scharniervarianten mit Paaren von in sich geschlossenen Lagerflächen;
- **Figur 5**: eine Ansicht einer Verschlusseinheit mit einem Scharnier, das eine offene Lagerfläche und eine Filmzone aufweist;
- **Figur 6**: einen Schnitt senkrecht zur Schwenkachse im Bereiche der Filmzone durch ein Scharnier gemäss Figur 5;
- **Figur 7**: ein Detail aus dem Schnitt gemäss Figur 6;
- **Figuren 8a und 8b**: Skizzen zur Illustration der Behandlung der Filmzone während der Herstellung durch ein Zweimaterialien-Spritzgussverfahren (Figur 8a: Giessstufe für Material A, Figur 8b: Giessstufe für Material B);
- **Figur 9**: eine Verschlusseinheit mit Filmzone gemäss Figur 5 im Schnitt (Schnittebene in der Fläche der Scharnierzone und der Sollbruchstelle);
- **Figur 10**: die Sollbruchstelle, die Sollbruchstellen-Endzonen und die Filmzone der Ausführungsform gemäss Figur 9 im Detail;
- **Figuren 11a und 11b**: weitere beispielhafte Ausführungsformen von Verschlusseinheiten mDTit Filmzonen und Sollbruchstellen;
- **Figur 12**: Scharnierbereich einer erfindungsgemässen Verschlusseinheit mit Scharnier mit einer offenen Lagerfläche und einer Filmzone, das für eine Auszeichnung bestimmter Schwenkpositionen des Verschlussteiles ausgestaltet ist;
- **Figuren 13a bis 13f**: verschiedene weitere Ausführungsformen von Formschlussmitteln zur Auszeichnung von bestimmten Öffungspositionen.

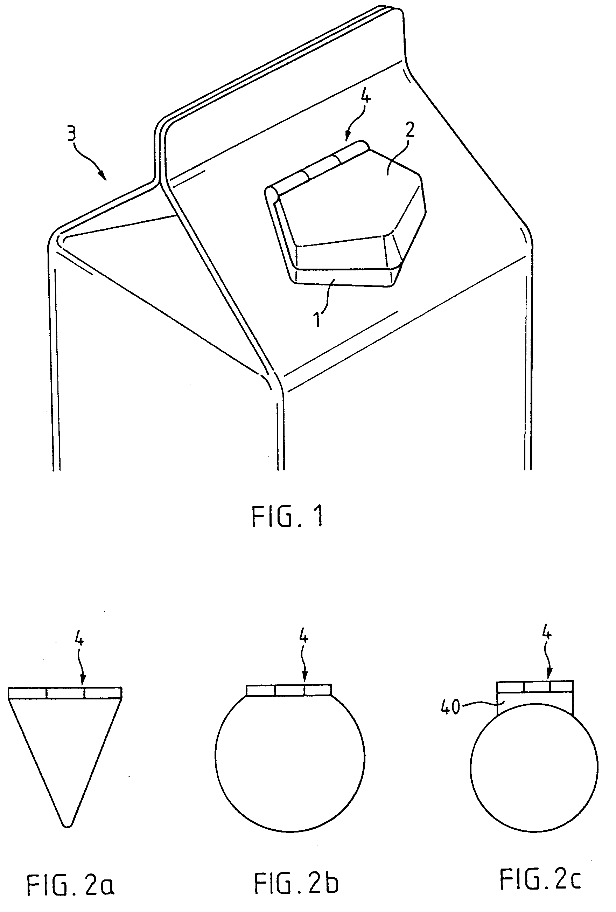

**Figur 1** zeigt eine beispielhafte Ausführungsform der erfindungsgemässen Verschlusseinheit bestehend aus einem Ausgussteil 1 und einem Verschlussteil 2. Die dargestellte Verschlusseinheit ist auf einem Behälter 3 aus beschichtetem Karton montiert. Die Ausgussöffnung und der Verschlussteil sind im wesentlichen fünfeckig, wobei eine der fünf Seiten ein Scharnier 4 aufweist, mit dessen Hilfe der Verschlussteil 2 begrenzt schwenkbar auf dem Ausgussteil 1 befestigt ist.

**Figuren 2a bis 2c** zeigen als schematische Draufsichten auf den Verschlussteil weitere, beispielhafte Ausführungsformen von Verschlusseinheiten mit Scharnieren 4. Kompakte Verschlusseinheiten sind möglich, wenn das Scharnier die Ausgussöffnung direkt begrenzt, derart, dass das Scharnier wenigstens einen Teil der zwischen dem Ausgussteil und dem Verschlussteil notwendigen Dichtung übernimmt. Derartige Ausführungsformen besitzen eine wenigstens bereichsweise geradlinige Begrenzung der Ausgussöffnung. Beispiele dafür sind in den Figuren 2a und 2b dargestellt. Besitzt die Ausgussöffnung keinen geraden Wandteil, ist sie also beispielsweise wie in der Figur 2c dargestellt rund, dann kann das Scharnier an entsprechenden Anformungen 40 am Ausgussteil angeformt sein.

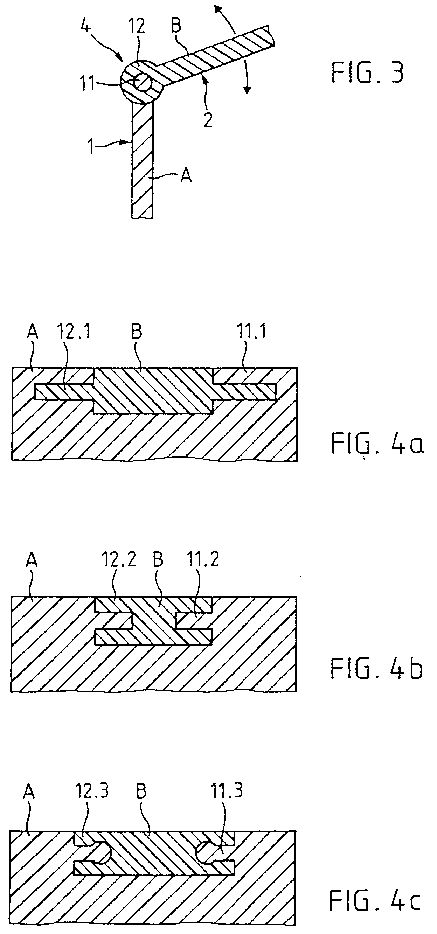

**Figuren 3 und 4a bis 4c** zeigen nun Schnitte durch beispielhafte Ausführungsformen von Scharnieren mit in sich geschlossenen Lagerflächen für erfindungsgemässe Verschlusseinheiten beispielsweise gemäss Figuren 1 oder 2, wobei die Schnitte senkrecht zur Schwenkachse des Scharnieres (Figur 3) oder mit der Schwenkachse in der Schnittebene (Figuren 4a bis 4c) gelegt sind. Das Scharnier seinerseits weist mindestens einen Lagerteil 11 auf, der an den Ausgussteil 1 angeformt ist, und einen Scharnierteil 12, der am Verschlussteil 2 angeformt ist, wobei Lagerteil und Scharnierteil Lagerflächenpaare für eine Schwenkbewegung des Scharnierteiles und damit des Verschlussteiles aufweisen. Dabei ist das Lagerflächenpaar in sich geschlossen ausgestaltet, hier in der Form eines Zylindermantels, sodass es neben der Funktion der Lagerung für die Schwenkbewegung des Verschlussteiles auch die Funktion der permanenten Verbindung des Verschlussteiles 2 am Ausgussteil 1 übernimmt.

Die Verschlusseinheit besteht aus mindestens zwei, sich in mindestens einer Eigenschaft unterscheidbaren Materialien A und B derart, dass die Lagerteile, die an den Ausgussteil angeformt sind, aus einem Material A bestehen, die Scharnierteile, die an den Verschlussteil angeformt sind, aus einem anderen Material B bestehen. Aufeinander gleitende Lagerflächen sind also eine Fläche aus dem Material A und eine Fläche aus dem Material B. Bei der Herstellung nach dem Mehrmaterial-Spritzgussverfahren wird ein Vorspritzling aus einem Material A gegossen, dann die Giessformen wenigstens teilweise ausgewechselt und dann der fertige Teil durch Zugiessen eines anderen Materials B gegossen, wobei der Vorspritzling wenigstens teilweise als Giessform dient. Die durch das Aneinandergiessen entstehenden Berührungsflächen der beiden Materialien sind je nach Wahl der Materialien, je nach Temperaturführung des Giessprozesses und je nach geometrischer Form fest miteinander verbunden oder gegeneinander beweglich. Für das Scharnier müssen sie gegeneinander beweglich sein. In jedem Falle liegen aneinander gegossene Flächen exakt und dichtend aufeinander. Dies wird für die Herstellung der Scharniere für die erfindungsgemässe Verschlusseinheit ausgenützt.

Die Lagerteile sind entweder zapfenförmig (11.2 und 11.3) oder hülsenförmig (11.1). Ein Scharnierteil ist entweder hülsenförmig (12.2 und 12.3) und umschliesst einen zapfenförmigen Lagerteil oder er ist zapfenförmig (12.1) und greift in einen hülsenförmigen Lagerteil.

Die zapfenförmigen Lagerteile 11.3 der Figur 4c zeigen Verdickungen und die hülsenförmigen Schamierteile 12.3 entsprechend geformte Lagerflächen. Derartig ausgestaltete Scharniere können nicht in Richtung der Schwenkachse auseinander gezogen werden. Während in den dargestellten Varianten ein derartiges Auseinanderziehen auch durch die Ausgestaltung der Lagerteile verunmöglicht ist, und deshalb eine Verdickungen der zapfenförmigen Teile lediglich eine zusätzliche Sicherung darstellt, sind Scharniere mit nur einem Lagerteil und nur einem Schamierteil denkbar, die nur durch eine entsprechende Verdickung des zapfenförmigen Teiles fest zusammen gehalten werden.

Die in den Figuren 4a bis 4c dargestellten Varianten zeigen alle zwei Lagerteile und einen doppelseitigen Scharnierteil. Weitere vorstellbare Varianten weisen beispielsweise zwei Scharnierteile und einen doppelseitigen Lagerteil auf, weitere doppelseitige Scharnier- bzw. Lagerteile oder eine gleiche Anzahl von Lagerteilen und Scharnierteilen und so weiter. Für Varianten mit wenig Lager- bzw. Scharnierteilen sind die Giessformen und die notwendigen Bewegungen, um diese vom gegossenen Teil zu entfernen, einfacher als für Varianten mit mehr Teilen. Dasselbe gilt für zapfenförmige Lagerteile im Vergleich zu hülsenförmigen Lagerteilen.

Mit noch einfacheren Giesswerkzeugen sind Verschlusseinheiten mit Scharnieren giessbar, die offene Lagerflächen haben. Derartige Verschlusseinheiten bzw. Scharniere sollen im folgenden beschrieben werden.

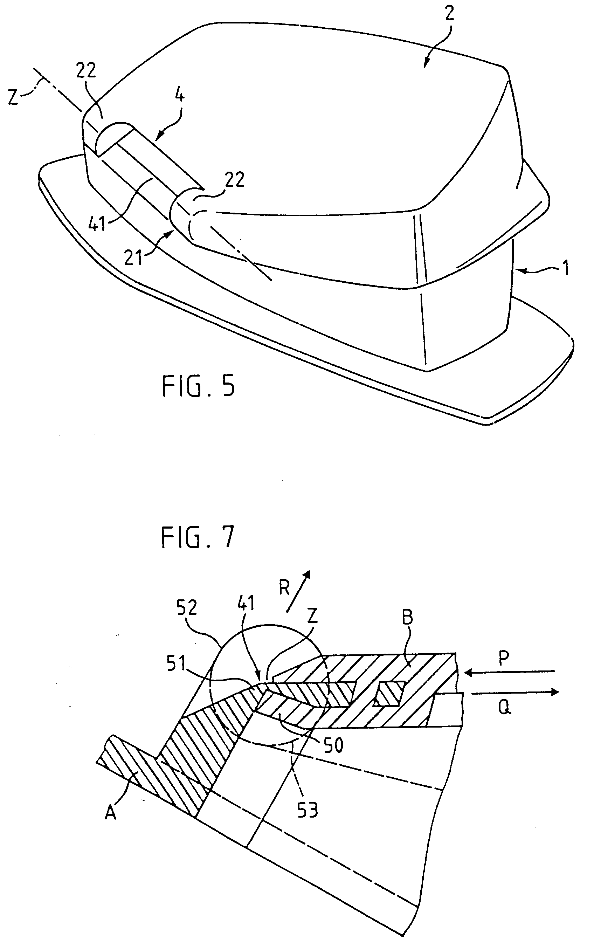

**Figur 5** zeigt wiederum eine beispielhafte Ausführungsform der erfindungsgemässen Verschlusseinheit mit einem Ausgussteil 1, einem Verschlussteil 2 und einem den Verschlussteil 2 mit dem Ausgussteil 1 schwenkbar verbindenden Scharnier 4. Das Scharnier weist wie bereits erwähnt mindestens einen an den Ausgussteil angeformten Lagerteil 21 und mindestens einen an den Verschlussteil angeformten Scharnierteil 22 auf, wobei die durch Lagerteil und Scharnierteil gemeinsam gebildeten Lagerflächenpaare nicht in sich geschlossen sind, derart, dass der Scharnierteil sich beim Verschwenken des Verschlussteiles zwar im Lagerteil dreht, dies aber nur, wenn der Verschlussteil durch ein weiteres Mittel am Ausgussteil befestigt ist. Dieses weitere Mittel ist beispielsweise eine schmale, im Bereiche der Schwenkachse Z des Scharnieres angeordnete, deformierbare Materialzone, beispielsweise eine dünne Filmzone 41, die sich vom Ausgussteil in den Verschlussteil erstreckt. Vorteilhafterweise ist diese Filmzone, wie in der Figur 5 dargestellt, mittig zwischen je einem Paar von Scharnier- und Lagerteil angeordnet.

Die Funktion der Filmzone ist die permanente Verbindung zwischen Verschlussteil und Ausgussteil. Die Funktion der Scharnier/Lagerteil-Paare ist die exakte Positionierung der Schwenkachse und die Aufnahme von Kräften auf den Verschlussteil, die keine Verschwenkung des Verschlussteiles bewirken, beispielsweise Zug und Druckkräfte senkrecht zur Schwenkachse auf den Verschlussteil, das heisst sie verhindern grossteils Zusatzbelastungen der Filmzone. Dadurch wird eine sehr dünn ausgestaltete, eben filmförmige Deformationszone (Filmzone) möglich. Diese kann bei der Herstellung nach einem Mehrmaterialien-Spritzgussverfahren auch noch für eine erhöhte Flexibilität speziell behandelt werden. Dadurch wird erreicht, dass durch die Anforderungen an die Flexibilität der Filmzone die Materialauswahl für die Verschlusseinheit in nur sehr geringem Masse eingeschränkt werden muss.

Ein weiterer grosser Vorteil der Verschlusseinheit mit Filmscharnier (Scharnier mit mindestens einer Filmzone und mindestens einem Scharnier/Lagerteil-Paar) besteht darin, dass sie, wie bereits erwähnt mit einfachen Giessformen gegossen werden kann, dass im speziellen keine Hinterstechungen gegossen werden müssen. Das heisst mit anderen Worten, die Verschlusseinheit mit Filmscharnier kann mit Giessformen gegossen werden, die in nur zwei Richtungen entfernt werden müssen.

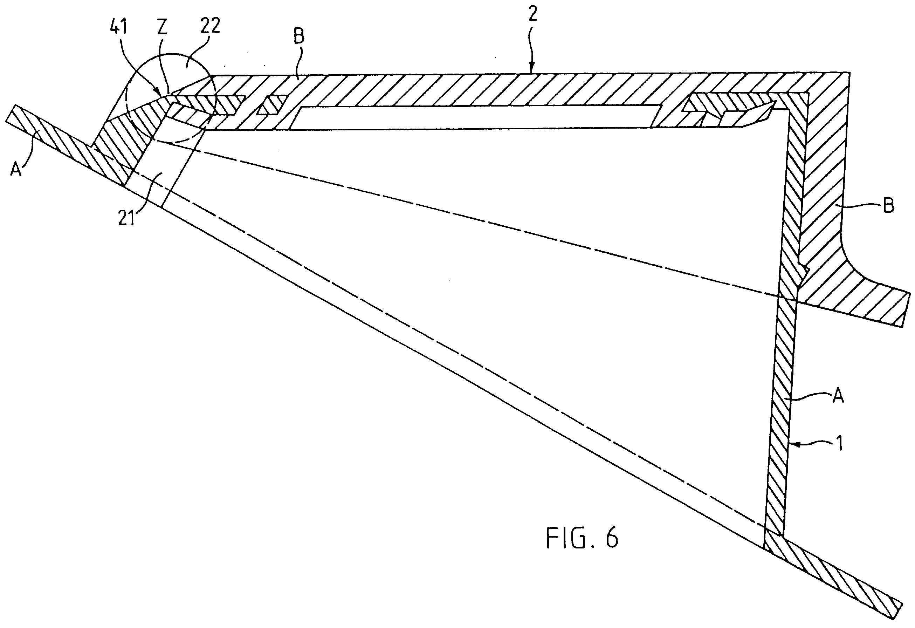

**Figur 6** zeigt nun als detaillierte Schnittzeichnung die Ausführungsform der erfindungsgemässen Verschlusseinheit gemäss Figur 5. Der Schnitt verläuft senkrecht zur Schwenkachse Z, und zwar im Bereich der Filmzone 41. Der Ausgussteil 1 besteht im wesentlichen aus einem ersten Material A. Der Bereich des Materials A reicht auch in den Verschlussteil 2 und bildet die Filmzone 41. Der Bereich aus dem Material A ist im Verschlussteil beispielsweise innen- und aussenseitig von einem zweiten Material B umschlossen. Die Scharnierteile 22 bestehen aus dem Material B, die Lagerteile 21 aus dem Material A. Die Schwenkachse Z läuft durch die Filmzone 41, die durch die dünnste Stelle des Bereiches aus dem Material A gebildet wird.

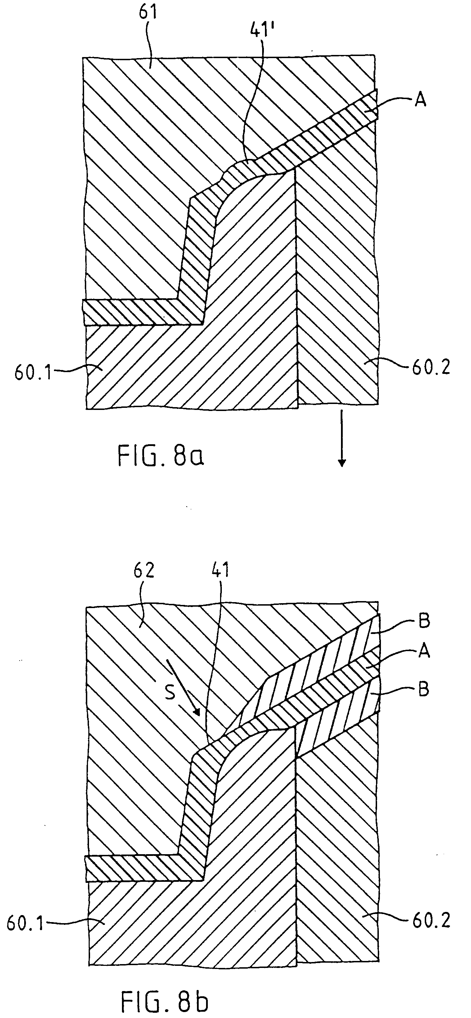

**Figur 7** zeigt als vergrössertes Detail die Scharnierzone der Verschlusseinheit gemäss Figur 6. Die Filmzone 41 wird gebildet durch eine steile Verjüngung (Zone 51) des Bereiches aus dem Material A, das die Wandung der Ausgussöffnung bildet. Dadurch sind Zonen unmittelbar neben der Filmzone stabil und können Kräfte, die nicht auf die Filmzone wirken sollen, aufnehmen. Dies wird in der dargestellten Ausführungsform ausgenützt, indem der Bereich aus dem Material B auf der Innenseite des Verschlussteiles so nahe wie möglich an die Schwenkachse Z gezogen ist (Zone 50). Kräfte, die in der Richtung des Pfeiles P wirken werden von der Zone 50 des Bereiches des Materials B auf die Zone 51 der Wandung der Ausgussöffnung übertragen. Sie können dadurch die Filmzone 41 nicht deformieren. Auch die Lagerflächenpaare zwischen Scharnierteil 22 und Lagerteil 21 können derartige Kräfte in Richtung des Pfeiles P aufnehmen, wenn der Lagerteil 21 auf der Aussenseite des Scharnieres weit genug um den Scharnierteil 22 reicht (Zone 52). Die abgebildete Variante besitzt also zur Verhinderung von Kräften in der Richtung des Pfeiles P auf die Filmzone zwei Mittel: die auf der Wandung der Ausgussöffnung abgestützte Zone 50 des Bereiches des Materials B und die auf der Aussenseite des Scharnierteiles diesen umschliessende Zone 52 des Lagerteiles. Es sind selbstverständlich auch Varianten denkbar, die nur eines dieser Mittel besitzen, an denen also beispielsweise die Zone 50 des Bereiches aus dem Material B oder die Zone 52 des Lagerteiles, die eine Bewegung des Verschlussteiles in der Richtung des Pfeiles P verhindert, fehlen.

Kräfte in der Richtung des Pfeiles Q können ebenfalls nicht deformierend auf die Filmzone wirken, da sie über den Scharnierteil 22 auf die Zone 53 des Lagerteiles 21 übertragen werden.

Kräfte, die parallel zur Schwenkachse Z auf den Verschlussteil wirken, können die Filmzone auch nicht deformieren, da die Scharnierteile 22 seitlich eng an die Zone 51 der Wandung der Ausgussöffnung anschliessen, sodass eine Bewegung des Verschlussteiles in Richtung der Schwenkachse nicht möglich ist.

Damit die Scharnier/Lagerteil-Paare auch Kräfte senkrecht zur Schwenkachse und weg vom Ausgussteil (Pfeil R) aufnehmen könnten, müssten der Lagerteil 21 sich mehr als halbkreisförmig um den Scharnierteil erstrecken, oder auch in sich geschlossen sein.

Auch die Verschlusseinheit mit Filmscharnier wird mit einem Mehrmaterialien-Spritzgussverfahren hergestellt. Dabei wird in einer ersten Stufe ein Vorspritzling aus dem Material A gegossen, der dem ganzen Bereich in der fertigen Einheit, die aus dem Material A besteht, im wesentlichen entspricht. In einer nächsten Stufe werden die Giessformen wenigstens teilweise vom Vorspritzling entfernt und durch andere Giessformen ersetzt und dann das Material B gegossen, wobei der Vorspritzling wenigstens teilweise als Giessform dient. Es ist nun möglich, mit der Giessform für die zweite Giessstufe den Vorspritzling leicht zu deformieren, indem bei der Bewegung der Giessform auf den Vorspritzling gedrückt wird. Durch einen derartigen Druck verändert sich die Struktur des gegossenen, noch warmen Materials, indem sich beispielsweise Makromoleküle ausrichten, was für bestimmte thermoplastische Kunststoffe zu einer Erhöhung der Flexibilität führt, sodass die Gefahr der Rissbildung in der Filmzone beim Gebrauch des Scharniers sinkt. Durch eine derartige Behandlung wird derselbe Effekt erzielt wie durch einen ersten Schliessvorgang sofort nach dem Giessen von entsprechenden Filrnscharnieren, die aus *einem* Material in offenem Zustand gegossen werden.

**Figuren 8a und 8b** zeigen schematisch den beschriebenen Giessvorgang im Bereiche der Filmzone, die durch Druck behandelt wird. Figur 8a zeigt den Vorspritzling unmittelbar nach dem Giessen des Bereiches aus dem Material A zwischen einer inneren Giessform 60.1 und 60.2 und einer äusseren Giessform 61. Die dabei erzeugte Filmzone 41' entspricht der Filmzone des fertigen Produktes insofern nicht, als sie leicht dicker ist. Wenn der Vorspritzling aus dem Material A genügend abgekühlt ist, werden die Giessformen bewegt (60.2), entfernt (61) und durch neue ersetzt (62) oder belassen (60.1). Dann wird das Material B gegossen, wobei der Vorspritzling wenigstens teilweise als Giessform dient. Soll eine bestimmt Zone des Vorspritzlings eine durch Druck deformierende Behandlung erfahren, kann diese Zone beidseitig nicht von Material B umgossen werden. Wenigstens auf einer Seite der zu behandelnden Zone wird die Giessform derart ersetzt, dass der Vorspritzling zwischen den beiden Giessformen für die zweite Giessstufe deformiert werden muss. Die Figur 8b zeigt die stationäre Giessform (60.1) auf der inneren Seite der Filmzone und die neue Giessform 62 auf der äusseren Seite der Filmzone, die derart geformt ist, dass sie der vorgegossenen Filmzone 41' nicht entspricht und dadurch auf diese eine deformierende Kraft (Pfeil S) ausübt.

Vorteilhafterweise wird die Dicke der durch Druck zu behandelnden Zone des Vorspritzlings durch die Giessform der zweiten Gissstufe um etwa 20 bis 40% reduziert.

Es ist aus der Figur 8b ersichtlich, dass bei diesem Herstellungsverfahren mit Deformation des Vorspritzlings eine Zone 50 (siehe Figur 7) des Bereiches aus dem Material B zur Abstützung des Verschlussteiles auf der Wandung der Ausgussöffnung nicht möglich ist. Diese Funktion muss in einem solchen Falle von einem entsprechend geformten Lagerteil 21 (Zone 52, Figur 7) übernommen werden.

In der genannten Anmeldung Nr. 2740/91 wird für eine zusätzliche Sicherung der Verschlusseinheit im Neuzustand gefordert, dass mindestens einer der Bereiche der Verschlusseinheit, der aus einem der verschiedenen Materialien besteht, sich über den Ausgussteil und den Verschlussteil erstreckt und dass dieser Bereich mindestens teilweise um den inneren Umfang der Ausgussöffnung eine Sollbruchstelle aufweist, die beim ersten Öffnen gebrochen wird.

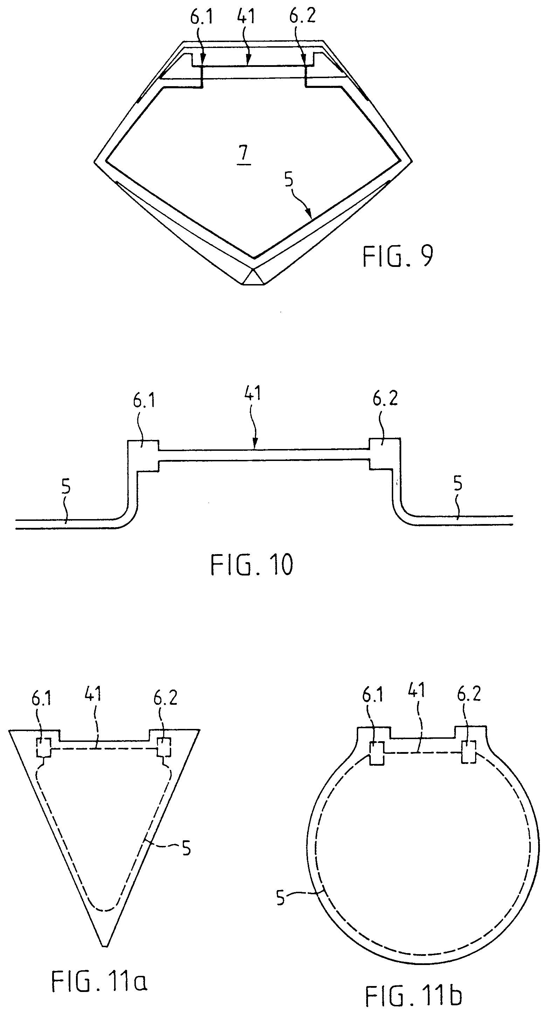

**Figur 9** zeigt eine beispielhafte Ausführungsform einer Verschlusseinheit, die dieser Anforderung genügt. Die dargestellte Verschlusseinheit ist parallel zur Ausgussöffnung 7 geschnitten. Sie weist ein Filmscharnier mit einer Filmzone 41 auf, die zusammen mit einer Sollbruchstelle 5 eine in sich geschlossene, um die Ausgussöffnung 7 liegende Linie bildet. Das heisst mit anderen Worten, dass bei ersten Öffnen der Verschlusseinheit ein schmaler Materialbereich bis zu einem bestimmten Punkt (6.1 und 6.2) zerstört (Sollbruchstelle 5), ab diesem Punkt aber lediglich deformiert (Filmzone 41) werden soll.

Sollbruchstellen sind problemlos, wenn sie von einem Rande eines Materialbereiches zu einem anderen Rande des Materialbereiches reichen oder wenn sie in sich geschlossen sind. Enden sie im Innern eines Materialbereiches, wie im vorliegenden Falle, entsteht am Ende der Sollbruchstelle eine Zone (6.1 und 6.2), die beim Aufbrechen der Sollbruchstelle zwar deformiert, aber nicht zerstört werden soll. Es besteht in dieser Zone immer die Gefahr, dass durch unsorgfältiges Brechen der Sollbruchstelle auch Material unmittelbar ausserhalb der Sollbruchstelle bricht oder durch feine Risse geschwächt wird und dass solche Risse durch weiteren Gebrauch weiter in das Material propagieren.

In anderen Anwendungen werden im Grenzbereich von Sollbruchstellen Löcher angebracht, die ein Weiterreissen von der Sollbruchstelle in das Material, das nicht mehr zur Sollbruchstelle gehört, verhindern. Dies ist aber im vorliegenden Falle nicht vorteilhaft, da der sich vom Ausgussteil in den Verschlussteil erstreckende Materialbereich auch eine Dichtfunktion zwischen den beiden Teilen übernehmen soll.

Zwischen der Sollbruchstelle 5 und der Filmzone 41, die beide einen schmalen Bereich dünnen Materials darstellen, sind nun je eine breitere Zone dünnen Materials vorgesehen, die während dem Herstellungsprozess für zusätzliche Elastizität und Flexibilität behandelt werden können. Diese beiden Sollbruchstellen-Endzonen 6.1 und 6.2 bilden beim Aufbrechen der Sollbruchstelle deren Endpunkte und die Angelpunkte für die Schwenkbewegung des Verschlussteiles. Sie werden beim Aufbrechen der effektiven Sollbruchstelle 5 deformiert, ohne zu reissen. Sie dienen also als Pufferzonen zwischen den bewegten Zonen der Sollbruchstelle und deren unmittelbarer Umgebung und den durch die Sollbruchstelle nicht zu beeinflussenden Materialzonen. Die Sollbruchstellen-Endzonen sind flächig, dünn und, wenn notwendig für erhöhte Elastizität und Flexibilität behandelt.

**Figur 10** zeigt nun grösser die Sollbruchstellen-Endzonen 6.1 und 6.2 zwischen der Filmzone 41 und der Sollbruchstelle 5. Diese Sollbruchstellen-Endzonen werden beim Aufbrechen der Sollbruchstelle und bei jedem folgenden Öffnungs-oder Schliessvorgang der Verschlusseinheit wohl deformiert aber wegen ihrer hohen Flexibilität und Elastizität kaum angerissen. Sie dienen als Pufferzone für Risse, die aus der Sollbruchstelle weiterreissen.

Die Sollbruchstellen-Endzonen der erfindungsgemässen Verschlusseinheit messen vorteilhafterweise über ihre Fläche 0,1 bis 1,5mm, in ihrer Dicke 0,05 bis 0,3mm. Sie können dabei eine beliebige Form aufweisen, wobei aber scharfe Ecken vorteilhafterweise vermieden werden.

Die Sollbruchstellen-Endzonen werden bei der Herstellung der Verschlusseinheit gegossen und dann gepresst, wodurch sich die Struktur des Kunststoffes ändert, indem die Makromoleküle gegenüber dem gegossenem Zustand umorientiert werden. Dieses Verfahren entspricht dem für die Filmzone bereits beschriebenen Verfahren. Der Giessspalt für die erste Giessstufe kann im Bereiche der Sollbruchstellen-Endzonen bis zu ca. 40% breiter als für die zweite Giessstufe sein, sodass die Materialdicke in diesen Zonen durch den Presseffekt der Giessform für die zweite Giessstufe bis zu 40% reduziert wird.

**Figuren 11a und 11b** zeigen schematisch als Draufsicht auf den Verschlussteil zwei weitere Varianten von Verschlusseinheiten mit Filmzone 41, Sollbruchstelle 5 und dazwischen Sollbruchstellen-Endzonen 6.1 und 6.2.

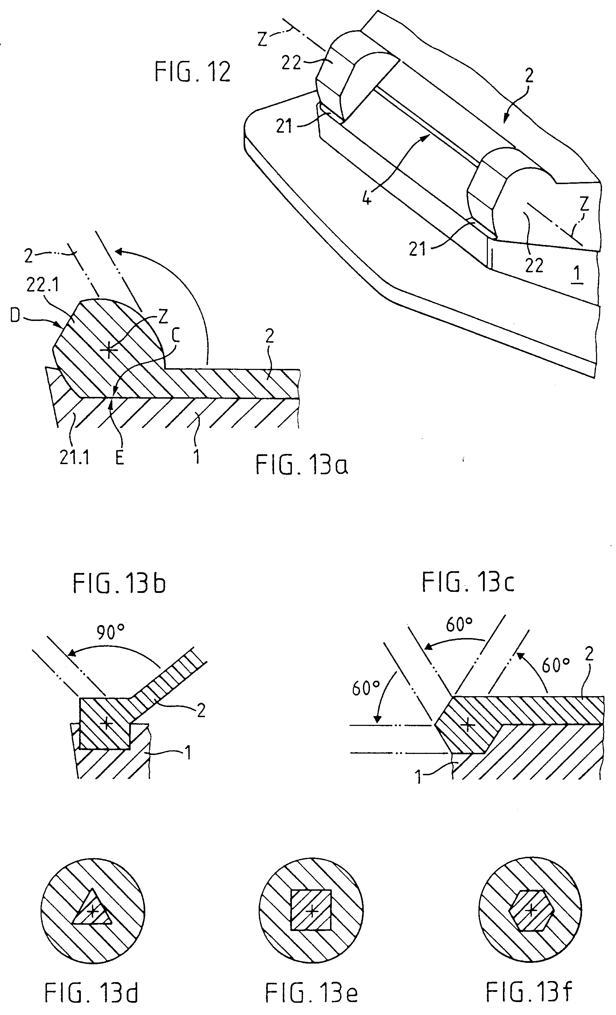

**Figuren 12 und 13a bis 13f** zeigen nun noch Details erfindungsgemässer Verschlusseinheiten, deren Scharniere derart ausgebildet sind, dass bestimmte Schwenkpositionen des Verschlussteiles ausgezeichnet sind. Die Auszeichnung von Schwenkpositionen bewirkt, dass der Verschlussteil unabhängig von den beim Öffnen wirkenden Kräften in eine (eventuell eine von verschiedenen) genau definierte Öffnungsposition gebracht wird, die gutes Ausgiessen und einen einfachen Schliessvorgang ermöglicht. Dazu weist die Verschlusseinheit im Bereiche des Scharniers Formschlussmittel auf, die den Verschlussteil in dieser ausgezeichneten Schwenkposition festhalten und einer Schwenkung des Verschlussteiles aus dieser ausgezeichneten Position elastischen Widerstand entgegensetzen. Dadurch wird die Kraft, die für eine Schwenkung notwendig ist, von der momentanen Schwenkposition und von der Schwenkrichtung abhängig, das heisst, sie ist beispielsweise grösser, wenn der Verschlussteil von einer ausgezeichneten Schwenkposition wegbewegt wird, kleiner, wenn er gegen eine ausgezeichnete Schwenkposition bewegt wird. Die Formschlussmittel können auch derart ausgestaltet sein, dass der Verschlussteil mindestens aus ihrer unmittelbaren Umgebung sich durch elastische Kräfte von selbst in die ausgezeichnete Position bewegt.

**Figur 12** zeigt eine beispielhafte Ausführungsform einer erfindungsgemässen Verschlusseinheit mit einem Filmscharnieres 4, das Ausgussteil 1 und Verschlussteil 2 begrenzt schwenkbar miteinander verbindet. Zur Auszeichnung von mindestens einer Schwenkposition (beispielsweise der offenen Position des Verschlussteiles) sind die Scharnierteile 22 und die Lagerteile 21 mit Formschlussmitteln ausgestaltet, derart, dass die Schwenkung des Verschlussteiles nicht nur gegen den Widerstand der Reibung der gegeneinander bewegenden Lagerflächen sondern zusätzlich gegen einen Formschlusswiderstand durchgeführt werden muss.

Die Auszeichnung einer bestimmten Öffnungsposition kann auch dazu benutzt werden, um ein allzu weites Öffnen des Scharnieres, das zu einer Überdehnung der Filmzone führen könnte, zu verhindern.

Um einen derartigen Formschlusswiderstand zu erreichen sind die Lagerflächenpaare zwischen Scharnierteil 22 und Lagerteil 21 nicht rotationssymmetrisch zur Schwenkachse Z ausgestaltet. Diese Asymmetrie darf nur derartige Ausmasse haben, wie die Teile elastisch deformiert werden können, damit der den Verschlussteil in der ausgezeichneten Schwenkposition haltende Formschluss mit einem entsprechenden Kraftaufwand trotzdem gelöst werden kann, ohne das Scharnier zu beschädigen.

Formschlussmittel zur Auszeichnung von Schwenkpositionen bestehen vorteilhafterweise aus ebenen Bereichen in den Lagerflächenpaaren. Entsprechende Formschlussmittel sind sowohl an Verschlusseinheiten mit Filmzone (Fig. 12) als auch an Verschlusseinheiten mit Scharnieren, die geschlossene Lagerflächen aufweisen, denkbar.

**Figuren 13a bis 13f** zeigen nun als Schnitt senkrecht zur Schwenkachse Scharniere mit Formschlussmitteln.

**Figur 13a** zeigt die bereits in der Figur 12 schematisch angedeuteten Formschlussmittel. Die Lagerfläche des Scharnierteils 22.1 besitzt zwei nicht rotationssymmetrische Stellen C und D, die Lagerfläche des Lagerteiles 21.1 besitzt eine diesen Stellen entsprechende Stelle E. Der Scharnierteil 22.1, der am Verschlussteil 2 angeformt ist, hat derart zwei ausgezeichnete Schwenkpositionen: die eine, wenn die Stelle C auf der Stelle E liegt (ausgezogene Schwenkposition von Schwenkteil und Verschlussteil), die andere, wenn die Stelle D auf der Stelle E liegt (strichpunktierte Schwenkposition des Verschlussteils). Diese beiden Schwenkpositionen können beispielsweise die geschlossene und eine für bequemes Ausgiessen geeignete offene Stellung des Verschlussteiles darstellen.

**Figuren 13b und 13c** zeigen weitere entsprechende Ausführungsformen von mit Formschlussmitteln versehenen Filmscharnieren. Ein Scharnier gemäss Figur 13b weist zwei ausgezeichnete Schwenkpositionen mit einem Zwischenwinkel von 90° auf, ein Scharnier gemäss Figur 13c vier ausgezeichnete Schwenkpositionen mit Zwischenwinkeln von je 60°.

**Figuren 13d bis 13f** zeigen entsprechende Formschlussmittel an Scharnier/Lagerteil-Paaren mit in sich geschlossenen Lagerflächen, wobei die Ausführungsform gemäss Figur 13d je nach Schwenkbereich bis zu drei ausgezeichnete Schwenkpositionen besitzt, die Ausführungsform der Figur 13e bis zu vier und die Ausführungsform gemäss Figur 13f bis zu sechs ausgezeichnete Schwenkpositionen haben kann.

Selbstverständlich sind neben den dargestellten Ausführungsformen auch Ausführungsformen denkbar mit Lagerflächen, die teilweise eben, teilweise rotationssymmetrisch gebogen sind.

## Patentansprüche

1. Verschlusseinheit aus thermoplastischem Kunststoff für ein Gebinde zur Handhabung und Lagerung von fliessfähigem Gut, aufsetzbar auf das Gebinde, bestehend aus einem im wesentlichen röhrenförmigen Ausgussteil (1) und einem die Öffnung des Ausgussteils verschliessenden Verschlussteil (2), die über ein Scharnier (4) schwenkbar miteinander verbunden sind, wobei die Verschlusseinheit mindestens zwei Bereiche aus Materialien (A,B) aufweist, die sich in mindestens einer Eigenschaft unterscheiden, wobei das Scharnier (4) mindestens einen am Ausgussteil (1) angeformten Lagerteil (11, 21) und für jeden Lagerteil einen am Verschlussteil (2) angeformten, in einem Lagerteil (11, 21) schwenkbar gelagerten Scharnierteil (12, 22) aufweist, wobei das Lagerteil (11, 21) aus dem Material (A) und das Scharnierteil (12, 22) aus dem anderen Material (B) besteht, **dadurch gekennzeichnet**, dass das Scharnier (4) die Ausgussöffnung begrenzt, die dadurch einen im wesentlichen geradlinig verlaufenden Wandbereich besitzt, und dass die Oberflächen des Lagerteils (11,21) und des Scharnierteils (12, 22) nach einem Mehrmaterialien-Spritzgussverfahren aneinandergegossen sind und dichtend aufeinander passen, so dass das Scharnier (4) im geschlossenen Zustand dicht ist.

2. Verschlusseinheit nach Anspruch 1, **dadurch gekennzeichnet**, dass zwischen zwei Paaren von je einem Scharnierteil (22) und einem Lagerteil (21) eine den Verschlussteil (2) schwenkbar mit dem Ausgussteil (1) verbindende Filmzone (41) angeordnet ist, wobei die beiden Scharnierteile (22) eine gemeinsame Schwenkachse (Z) haben, die durch die Filmzone (41) verläuft.

3. Verschlusseinheit nach einem der Ansprüche 1 oder 2, **dadurch gekennzeichnet**, dass der Lagerteil (11.2 und 11.3) zapfenförmig ist und vom Scharnierteil (12.2 und 12.3) hülsenförmig umschlossen wird, derart, dass Lagerteil und Scharnierteil ein Paar von in sich geschlossenen Lagerflächen bilden.

4. Verschlusseinheit nach einem der Ansprüche 1 oder 2, **dadurch gekennzeichnet**, dass der Lagerteil (11.1) den zapfenförmigen Scharnierteil (12.1) hülsenförmig umschliesst, derart, dass Lagerteil und Scharnierteil ein Paar von in sich geschlossenen Lagerflächen bilden.

5. Verschlusseinheit nach einem der Ansprüche 3 oder 4, **dadurch gekennzeichnet**, dass der zapfenförmige Teil eine Verdickung aufweist, und die Öffnung des hülsenförmigen Teiles eine entsprechende Erweiterung.

6. Verschlusseinheit nach einem der Ansprüche 1 bis 5, **dadurch gekennzeichnet**, dass sie ein oder mehrere doppelseitige Lager- und/oder Scharnierteile aufweist.

7. Verschlusseinheit nach Anspruch 1, **dadurch gekennzeichnet**, dass die Lagerflächen zwischen je einem Scharnierteil (22) und einem Lagerteil (21) offen sind.

8. Verschlusseinheit nach einem der Ansprüche 1 oder 7, **dadurch gekennzeichnet**, dass das Material an der Filmzone (41) gegenüber anderen Zonen desselben Materials eine durch Druck veränderte Struktur aufweist.

9. Verschlusseinheit nach einem der Ansprüche 1, 7 oder 8, **dadurch gekennzeichnet**, dass einer der Bereiche aus einem Material (A) sich mindestens im Bereiche der Ausgussöffnung (7) rund um diese Ausgussöffnung vom Ausgussteil (1) in den Verschlussteil (2) erstreckt, zwischen den beiden Teilen eine schmale Zone dünnen Materials bildend, die teilweise als Filmzone (41), teilweise als Sollbruchstelle (5) dient.

10. Verschlusseinheit nach Anspruch 9, **dadurch gekennzeichnet**, dass zwischen der Filmzone (41) und der Sollbruchstelle (5) Sollbruchstellen-Endzonen (6.1 und 6.2) in Form von flächigen Erweiterungen der Zonen dünnen Materials angebracht sind.

11. Verschlusseinheit nach Anspruch 10, **dadurch gekennzeichnet**, dass die Sollbruchstellen-Endzonen (6.1 und 6.2) über ihre Fläche ein Ausmass von 0,1 bis 1,5mm haben.

12. Verschlusseinheit nach einem der Ansprüche 10 oder 11, **dadurch gekennzeichnet**, dass das Material in den Sollbruchstellen-Endzonen (6.1 und 6.2) eine gegenüber anderen Zonen desselben Materials veränderte Struktur aufweist.

13. Verschlusseinheit nach einem der Ansprüche 1 bis 12, **dadurch gekennzeichnet**, dass die Paare von Lagerteil (11, 21) und Scharnierteil (12, 22) Formschlussmittel bilden, die eine oder mehrere bestimmte Schwenkpositionen des Verschlussteils (2) derart auszeichnen, dass der Verschlussteil (2) in dieser oder diesen Positionen elastisch festgehalten wird und eine erhöhte Kraft notwendig ist, um den Verschlussteil aus einer solchen Position zu verschwenken.

14. Verschlusseinheit nach Anspruch 13, **dadurch gekennzeichnet**, dass als Formschlussmittel Lagerflächenpaare zur Anwendung kommen, die mindestens bereichsweise, ebene Bereiche aufweisen, wobei zwei einander entsprechende ebene Bereiche bei einer ausgezeichneten Schwenkposition aufeinander liegen.

15. Herstellungsverfahren für eine Verschlusseinheit nach einem der Ansprüche 1 bis 14, **dadurch gekennzeichnet**, dass aus einem ersten Material (A) ein Lager- bzw. Scharnierteil oder Teile umfassender Vorspritzling gegossen wird und dass dann aus einem zweiten Material (B) ein Scharnier- bzw. Lagerteil oder Teile urnfassender Bereich gegossen wird, wobei beim Giessen des zweiten Materials der Vorspritzling wenigstens teilweise als Giessform dient.

16. Herstellungsverfahren nach Anspruch 15, **dadurch gekennzeichnet**, dass der Vorspritzling den oder die Lagerteile (21) und eine den Ausgussteil (1) mit dem Verschlussteil (2) verbindende Filmzone (41) umfasst.

17. Herstellungsverfahren nach Anspruch 16, **dadurch gekennzeichnet**, dass die Giessform für das Giessen des zweiten Materials (B) den Vorspritzling im Bereiche der Filmzone (41) zusammenpresst.

18. Herstellungsverfahren nach einem der Ansprüche 16 oder 17, **dadurch gekennzeichnet**, dass der Vorspritzling zusätzlich eine Sollbruchstelle (5) mit Sollbruchstellen-Endzonen (6.1 und 6.2) aufweist, wobei an die Sollbruchstellenendzonen die Filmzone (41) anschliessen, und dass im Bereiche der Sollbruchstellen-Endzonen der gegossene Vorspritzling ebenfalls durch die Giessformen zusammengepresst wird.

19. Herstellungsverfahren nach Anspruch 18, **dadurch gekennzeichnet**, dass die Dicke der gegossenen Filmzone durch die Giessform um 20 bis 40%, die Dicke der gegossenen Sollbruchstellen-Endzonen bis zu 40% reduziert werden.

## Claims

1. Closure unit made from thermoplastic material for a container for handling and storing flowable products, which can be mounted on the container, comprising a substantially tubular pouring part (1) and a closure part (2) closing the pouring part opening and which are swivellably interconnected by means of a hinge (4), the closure unit having at least two areas of materials (A, B), which differ with regards to at least one property, the hinge (4) having at least one bearing part (11, 12) shaped on the pouring part (1) and for each bearing part a hinge part (12, 22) shaped on the closure part (2) and swivellably mounted in a bearing part (11, 21), the latter being made from the material (A) and the hinge part (12, 22) from the other material (B), characterized in that the hinge (4) bounds the pouring opening, which consequently has a substantially linearly directed wall area, and that the surfaces of the bearing part (11, 21) and the hinge part (12, 22) are moulded onto one another by a multimaterial injection moulding process and sealingly matched to one another, so that the hinge (4) is tight in the closed state.

2. Closure unit according to claim 1, characterized in that between two pairs of in each case one hinge part (22) and a bearing part (21) is located a film zone (41) connecting the closure part (2) in swivellable manner with the pouring part (1), the two hinge parts (22) having a common swivelling axis (Z) which passes through the film zone (41).

3. Closure unit according to one of the claims 1 or 2, characterized in that the bearing part (11.2 and 11.3) is pin-like and surrounded in sleeve-like manner by the hinge part (12.2 and 12.3), so that the bearing part and the hinge part form a pair of closed bearing surfaces.

4. Closure unit according to one of the claims 1 or 2, characterized in that the bearing part (11.1) surrounds in sleeve-like manner the pin-like hinge part (12.1), in such a way that the bearing part and the hinge part form a pair of closed bearing surfaces.

5. Closure unit according to one of the claims 3 or 4, characterized in that the pin-like part has a thickening and the opening of the sleeve-like part has a corresponding widening.

6. Closure unit according to one of the claims 1 to 5, characterized in that it has one or more double-sided bearing and/or hinge parts.

7. Closure unit according to claim 1, characterized in that between in each case one hinge part (22) and a bearing part (21), the bearing surfaces are open.

8. Closure unit according to one of the claims 1 or 7, characterized in that the material has a pressure-modified structure at the film zone (41) compared with other zones of the same material.

9. Closure unit according to one of the claims 1, 7 or 8, characterized in that one of the areas of material (A), at least in the vicinity of and around the pouring opening (7), extends from the pouring part (1) into the closure part (2), so as to form between the two parts a narrow, thin material zone, which partly serves as a film zone (41) and partly as a predetermined breaking point (5).

10. Closure unit according to claim 9, characterized in that between the film zone (41) and the predetermined breaking point (5) are formed predetermined breaking point end zones (6.1 and 6.2) in the form of flat extensions of the thin material zone.

11. Closure unit according to claim 10, characterized in that the predetermined breaking point end zones (6.1 and 6.2) have a size of 0.1 to 1.5 mm over their surface.

12. Closure unit according to one of the claims 10 or 11, characterized in that in the predetermined breaking point end zones (6.1 and 6.2), the material has a modified structure compared with the other zones of the same material.

13. Closure unit according to one of the claims 1 to 12, characterized in that pairs of bearing part (11, 21) and hinge part (12, 22) form positive engagement means, which define one or more specific swivelling positions of the closure part (2) in such a way that said closure part (2) in this or these positions is elastically secured and an increased force is necessary for swivelling the closure part from such a position.

14. Closure unit according to claim 13, characterized in that bearing surface pairs are used as positive engagement means and at least zonally have planar areas and two corresponding planar areas rest on one another at a specified swivelling position.

15. Manufacturing process for a closure unit according to one of the claims 1 to 14, characterized in that from a first material (A) is moulded a blank comprising a bearing or hinge part or parts and that then from a second material (B) is moulded an area comprising a hinge or bearing part or parts and on moulding the second material the blank at least partly serves as a mould.

16. Manufacturing process according to claim 15, characterized in that the blank comprises the bearing part or parts (21) and a film zone (41) linking the pouring part (1) with the closure part (2).

17. Manufacturing process according to claim 16, characterized in that the mould for moulding the second material (B) compresses the blank in the vicinity of the film zone (41).

18. Manufacturing process according to one of the claims 16 or 17, characterized in that the blank also has a predetermined breaking point (5) with predetermined breaking point end zones (6.1 and 6.2) and to the latter is connected the film zone (41) and that in the vicinity of the predetermined breaking point end zones the moulded blank is also compressed by the moulds.

19. Manufacturing process according to claim 18, characterized in that the thickness of the moulded film zone is reduced by the mould by 20 to 40% and the thickness of the moulded predetermined breaking point end zones by up to 40%.

## Revendications

1. Dispositif de fermeture en matière synthétique thermoplastique pour un récipient destiné à la manutention et au stockage de produits liquides, montable sur ledit récipient et constitué d'un élément verseur (1) de forme sensiblement tubulaire et d'un élément obturateur (2) qui obture l'ouverture de l'élément verseur, lesdits éléments (1) et (2) étant mutuellement reliés de manière pivotable par une charnière (4), le dispositif de fermeture présentant au moins deux zones faites de matières différentes (A, B) qui se distinguent au moins par l'une de leurs propriétés tandis que la charnière (4) présente au moins un élément d'appui (11, 21) moulé sur l'élément verseur (1) et pour chaque élément d'appui, un élément charnière (12, 22) moulé sur l'élément obturateur (2) et monté de manière pivotable dans un élément d'appui (11, 21), ledit élément d'appui (11, 21) étant réalisé dans le matériau (A) et l'élément charnière (12, 22) dans l'autre matériau (B), caractérisé en ce que la charnière délimite l'ouverture de versement qui, de ce fait, possède une paroi s'étendant sensiblement en ligne droite, et en ce que les surfaces de l'élément d'appui (11, 21) et de l'élément charnière (12, 22) sont moulées l'une sur l'autre dans un procédé de moulage par injection multi-matière et sont ajustées de manière étanche l'une sur l'autre de telle sorte qu'à l'état fermé la charnière (4) est étanche.

2. Dispositif de fermeture selon la revendication 1, caractérisé en ce que entre deux paires constituées chacune d'un élément charnière (22) et d'un élément appui (21) est disposée une zone en film (41) qui relie de manière pivotable l'élément obturateur (2) à l'élément verseur (1), les deux éléments de charnière (22) ayant un axe de pivotement commun (Z) qui s'étend à travers la zone en film (41).

3. Dispositif de fermeture selon l'une des revendications 1 ou 2, caractérisé en ce que l'élément appui (11.2 et 11.3) est en forme de pivot et entouré en formant une douille par l'élément charnière (12.2 et 12.3) de telle sorte que ledit élément appui et ledit élément charnière forment une paire de faces d'appui refermées l'une sur l'autre.

4. Dispositif de fermeture selon l'une des revendications 1 ou 2, caractérisé en ce que l'élément appui (11.1) entoure en formant une douille l'élément charnière (12.1) en forme de pivot de telle sorte que l'élément appui et l'élément charnière forment une paire de faces d'appui fermées l'une sur l'autre.

5. Dispositif de fermeture selon l'une des revendications 3 ou 4, caractérisé en ce que l'élément en forme de pivot présente une surépaisseur et que l'ouverture de l'élément en forme de douille présente un élargissement correspondant.

6. Dispositif de fermeture selon l'une des revendications 1 à 5, caractérisé en ce qu'il présente un seul ou plusieurs éléments d'appui et/ou éléments charnière à double face.

7. Dispositif de fermeture selon la revendication 1, caractérisé en ce que les faces d'appui entre respectivement un élément charnière (22) et un élément d'appui (21) sont ouvertes.

8. Dispositif de fermeture selon l'une des revendications 1 ou 7, caractérisé en ce que le matériau présent sur la zone en film (41) présente, par rapport au même matériau présent en d'autres zones, une structure altérée par la pression.

9. Dispositif de fermeture selon l'une des revendications 1, 7 ou 8, caractérisé en ce que, que l'une des zones faite en une matière (A) s'étend, au moins au voisinage de l'ouverture de versement (7), tout autour de cette ouverture entre l'élément verseur (1) et l'élément obturateur (2), formant entre ces deux éléments une zone étroite de matériau mince qui fait office partiellement de zone en film (41), et partiellement de zone de rupture (5).

10. Dispositif de fermeture selon la revendication 9, caractérisé en ce que entre la zone en film (41) et la zone de rupture (5) sont prévues des régions terminales (6.1 et 6.2) des zones de rupture ayant la forme d'élargissements plats des zones en matériau mince.

11. Dispositif de fermeture selon la revendication 10, caractérisé en ce que les zones terminales (6.1 et 6.2) des zones de rupture ont sur toute leur surface une dimension allant de 0,1 à 1,5 mm.

12. Dispositif de fermeture selon l'une des revendications 10 ou 11, caractérisé en ce que le matériau des zones terminales (6.1 et 6.2) des zones de rupture présente une structure différente de celle du même matériau présent dans d'autres zones.

13. Dispositif de fermeture selon l'une des revendications 1 à 12, caractérisé en ce que les paires constituées par l'élément d'appui (1, 21) et l'élément charnière (12, 22) forment des moyens d'ajustement géométrique qui définissent une ou plusieurs positions de pivotement de l'élément obturateur (2) de telle manière que ledit élément obturateur se trouve maintenu élastiquement dans cette ou ces positions et qu'il est nécessaire d'appliquer une force plus élevée pour faire sortir l'élément obturateur de l'une de ces positions.

14. Dispositif de fermeture selon la revendication (13), caractérisé en ce que pour servir de moyens d'ajustement géométrique, on utilise des paires de faces d'appui qui présentent, au moins par endroits, des régions planes, tandis que dans une position de pivotement précise deux zones planes mutuellement conformes viennent s'appuyer l'une sur l'autre.

15. Procédé de fabrication d'un dispositif de fermeture conforme à l'une des revendications 1 à 14, caractérisé en ce que l'on moule en un premier matériau (A) une pièce brute comprenant un ou plusieurs éléments d'appui ou de charnière et qu'ensuite on moule en un deuxième matériau (B) une zone comprenant un ou des éléments charnière ou d'appui, la pièce brute servant au moins partiellement de moule pour la coulée du deuxième matériau.

16. Procédé de fabrication selon la revendication 15, caractérisé en ce que la pièce brute comprend le ou les éléments (21) d'appui et une zone en film (41) reliant l'élément verseur (1) à l'élément obturateur (2).

17. Procédé de fabrication selon la revendication 16, caractérisé en ce que le moule pour la coulée du deuxième matériau (B) comprime la pièce brute dans la région de la zone en film (41).

18. Procédé de fabrication selon l'une des revendications 16 ou 17, caractérisé en ce que la pièce brute moulée présente en outre une zone de rupture (5) comportant des zones terminales (6.1 et 6.2), les zones de points destinés à la rupture faisant suite à la zone en film (41), et en ce que la pièce brute subit également une compression sous l'effet des moules de coulée dans la région des zones terminales de la zone de rupture.

19. Procédé de fabrication selon la revendication 18, caractérisé en ce que l'épaisseur de la zone en film est réduite de 20 à 40 % par le moule et que la réduction de l'épaisseur des zones terminales de la zone de rupture atteint 40 %.
